# EUROPÄISCHE PATENTSCHRIFT

(11) **EP 1 957 232 B1**
(45) Veröffentlichungstag und Bekanntmachung des Hinweises auf die Patenterteilung: **12.01.2011**
(21) Anmeldenummer: 05825522.5
(22) Anmeldetag: 25.11.2005
(51) Int. Cl.: B23K 26/14, B23K 26/38

(54) **LASERBEARBEITUNGSDÜSE**
LASER MACHINING NOZZLE
BUSE D'USINAGE PAR LASER

(43) Veröffentlichungstag der Anmeldung: 20.08.2008
(73) Patentinhaber: TRUMPF Werkzeugmaschinen GmbH + Co. KG, 71254 Ditzingen (DE)
(72) Erfinder: SPEKER, Nicolai, 74385 Pleidelsheim (DE)
(74) Vertreter: Kohler Schmid Möbus
(86) Internationale Anmeldenummer: PCT/EP2005/012625
(87) Internationale Veröffentlichungsnummer: WO 2007/059787

(56) Entgegenhaltungen:
- US-A- 4 774 392
- US-A- 6 118 097

## Beschreibung

Die Erfindung betrifft eine Laserbearbeitungsdüse mit mindestens einem Zuführungsraum für den Laserstrahl und für ein Bearbeitungsgas.

Eine derartige Laserbearbeitungsdüse ist beispielsweise durch die US 6,423,928 B1 und die US-A-6 118 097 bekannt geworden.

Gemäß dem Stand der Technik ist der Mündungsdurchmesser einer als Lochdüse ausgebildeten Laserbearbeitungsdüse beim Schmelzschneiden (z.B. VA) mit zunehmender zu bearbeitender Blechdicke zu vergrößern. Aus diesem Grund werden immer höhere Gasdrücke benötigt. Steigende Gasdrücke bedeuten aber eine immer höhere Gasdichte im Schnittspalt, wodurch die Plasmabildung immer wahrscheinlicher wird. Die Plasmaschwelle ist unter anderem auch von der eingestrahlten Leistungsdichte (hohe Leistungsdichte bzw. Prozesstemperatur >> Plasma) und der Fokuslage (hohe Fokuslage >> Plasma) abhängig und stellt eine Beschränkung des qualitativ besseren Schmelzschnitts dar.

Beim Schneiden dicker Bleche lassen sich bessere Schnittflankenqualitäten erreichen, wenn der Schneidgasdruck verringert wird. Damit ist aber immer die Bildung eines starken Grat verbunden.

Es soll die Aufgabe gelöst werden, eine Düse zum Laserstrahlschneiden derart weiterzubilden, dass qualitativ höherwertige Schnitte bezüglich der Schneidflankenrauigkeit erreicht werden können, wobei es von besonderem Interesse ist, die Schneideffizienz zu erhöhen, d.h. es sollen höhere Vorschübe unter Beibehaltung der hochwertigen Schnittqualität erreicht werden. Speziell beim Schneiden dicker Bleche muss der Plasmabildung entgegen gewirkt werden.

Diese Aufgabe wird durch eine Laserbearbeitungsdüse gemäß Anspruch 1 gelöst.

Die Wirkung der erfindungsgemäßen Laserbearbeitungsdüse zielt darauf ab, einen größeren Überdeckungsgrad der Schneidfront zu erhalten, ohne dass der Mündungsdurchmesser der Laserbearbeitungsdüse vergrößert werden muss. Dabei wird vermieden, dass in der Wirkung ein Diffusor entsteht, welcher einen geringeren Impuls auf die Schmelze zur Folge hat.

Mithilfe der erfindungsgemäßen keilförmigen Kante kommt es zur Ausbildung einer Walzenströmung. Die Walzenströmung führt dazu, dass der Hauptgasstrahl zunächst in ein Volumen (Stauvolumen) einströmt, dessen Druck gegenüber der Umgebung erhöht ist. Das Bearbeitungsgas erreicht dadurch im Vergleich zu bekannten Laserbearbeitungsdüsen eine höhere Ausströmgeschwindigkeit aus der Mündung, wodurch ein verbesserter Impulsübertrag auf das Blech bzw. auf die Schneidfront möglich wird. Durch die gleichgerichteten Geschwindigkeiten im Übergangsbereich zwischen der Walzenströmung und dem Hauptgasstrahl werden die Reibungsverluste zwischen dem Hauptgasstrahl und der Umgebung im Vergleich zu bekannten Laserbearbeitungsdüsen vermindert. Die Walzenströmung hat zudem eine Stützwirkung für den Hauptgasstrahl im Bereich über dem Werkstück. Ein weiterer Stützeffekt entsteht im Inneren des Schnittspalts. Der Hauptgasstrahl löst sich im Vergleich zu bekannten Laserbearbeitungsdüsen erst weiter unten von der Schneidfront. Dies führt zu einer verbesserten Schneidkante.

Bei einer bevorzugten Ausführungsform der Erfindung ist der Hohlraum rotationssymmetrisch zur Mündung des Gaszuführungsraums angeordnet. Durch diese Anordnung ergibt sich eine Ummantelung des Bearbeitungsgasstrahls mit einem Stauvolumen von Bearbeitungsgas. Dies erzeugt eine rotätionssymmetrische Überdeckung der Schneidfront.

Die Mündung des Gaszuführungsraums ist hinter die Düsenspitze der Laserbearbeitungsdüse zurückgezogen, so daß das Bearbeitungsgas sehr gut gestaut werden und in den Hohlraum einströmen kann.

Die Ausbildung der Walzenströmung wird weiter dadurch unterstützt, dass der Hohlraum im Bereich des Hohlraumbodens eine rund ausgebildete Innenkontur aufweist.

Es ist aber auch denkbar, dass der Hohlraum im Bereich des Hohlraumbodens eine eckig ausgebildete Innenkontur aufweist.

Wenn die Innenseiten des Hohlraums bezüglich der Richtung des Gaszuführungsraums quer angeordnet sind bzw. geneigt verlaufen, kann Bearbeitungsgas nahezu radial in den Hohlraum einströmen.

Die Erstreckung des Hohlraums hinter die Mündung des Gaszuführungsraums optimiert die Strömungsverhältnisse.

Mithilfe der Auslaufkante kann das rückströmende Gas dem Hauptgasstrahl möglich koaxial zu strömen. Dies verbessert die Schneidergebnisse zusätzlich.

Ausführungsbeispiele der Erfindung sind in der Zeichnung schematisch dargestellt und werden nachfolgend mit Bezug zu den Figuren der Zeichnung näher erläutert. Es zeigt im Einzelnen:
- **Fig. 1**: den Aufbau einer Laserschneidanlage;
- **Fig. 2**: eine erste erfindungsgemäße Laserbearbeitungsdüse im Längsschnitt;
- **Fig. 3a, 3b**: weitere erfindungsgemäße Laserbearbeitungsdüsen;
- **Fig. 4a bis**: weitere erfindungsgemäße Laserbearbeitungsdüsen.

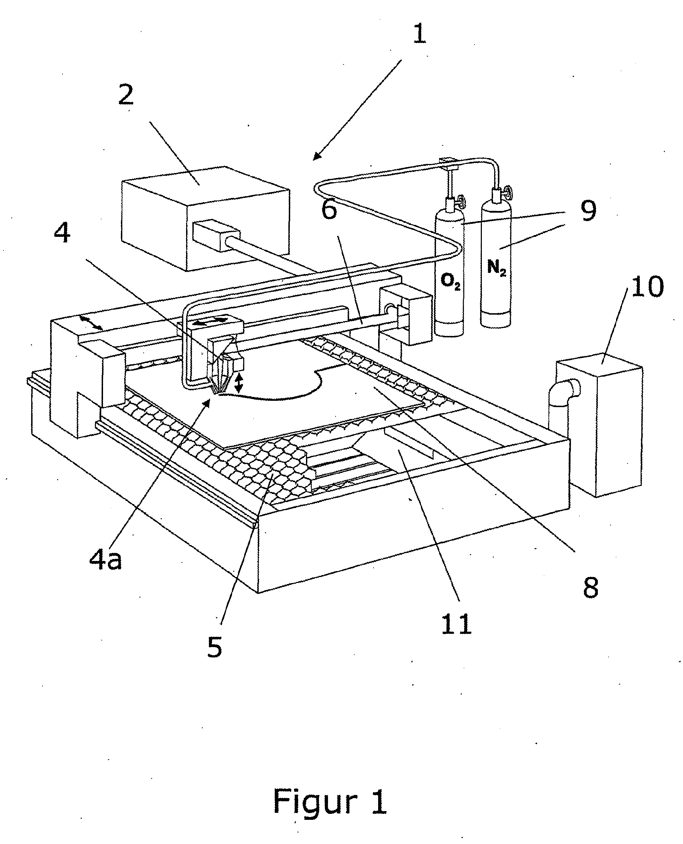

Aus der **Figur 1** ist der Aufbau einer Laserbearbeitungsanlage **1** zum Laserschneiden mit einem CO₂-Laser **2,** einem Laserbearbeitungskopf **4** (Laserbearbeitungsdüse **4a**) und einer Werkstückauflage **5** ersichtlich. Ein erzeugter Laserstrahl **6** wird mithilfe von Umlenkspiegeln zum Laserbearbeitungskopf **4** geführt und mithilfe von Spiegeln auf ein Werkstück **8** gerichtet.

Bevor eine durchgängige Schnittfuge entsteht, muss der Laserstrahl 6 das Werkstück 8 durchdringen. Das Blech 8 muss an einer Stelle punktförmig geschmolzen oder oxidiert werden, und die Schmelze muss ausgeblasen werden.

Sowohl das Einstechen als auch das Laserschneiden werden durch Hinzufügen eines Gases unterstützt. Als Schneidgase **9** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Entstehende Partikel und Gase können mithilfe einer Absaugeinrichtung **10** aus einer Absaugkammer **11** abgesaugt werden.

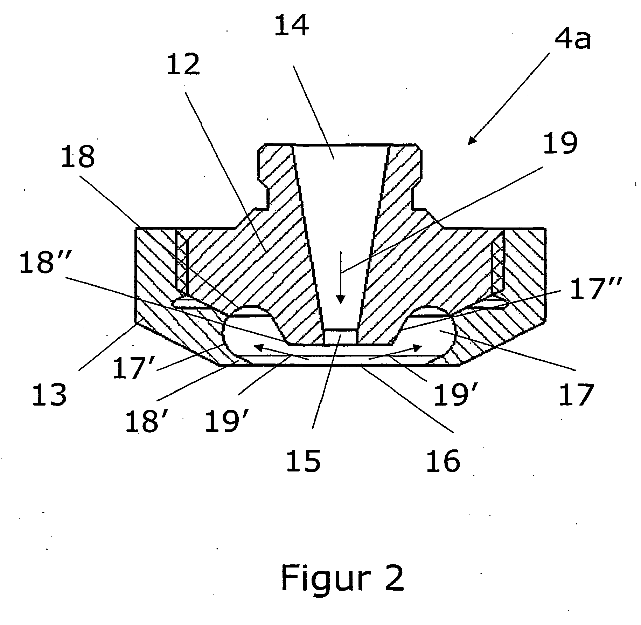

Gemäß **Figur 2** ist die erfindungsgemäße Laserbearbeitungsdüse 4a aus zwei miteinander verbundenen Bauteilen **12** und **13** aufgebaut. Die als Lochdüse ausgebildete Laserbearbeitungsdüse 4a weist einen zentralen Zuführungsraum **14** für das Schneidgas und den Laserstrahl auf.

Eine zylindrische Mündung **15** der Lochdüse 4a ist in Strömungsrichtung gesehen hinter eine Düsenspitze **16** zurückgezogen. Rotationssymmetrisch zur Mündung 15 ist ein ringförmig verlaufender Hohlraum **17** zur Aufnahme von Schneidgas vorgesehen. Der Hohlraum 17 ist nur zur Unterseite der Laserbearbeitungsdüse 4a, d.h. zum Werkstück und zur Mündung 15 hin, offen und weist einen rund ausgebildeten Boden **18** auf. Das für das Schneidgas zur Verfügung stehende Stauvolumen breitet sich somit radial und auch hinter die Düsenmündung 15 hin aus. Pfeile (Hauptgasstrahl **19** und gestauter Gasstrahl **19'**) deuten in der Figur 2 die Strömung des Schneidgases an. An der Düsenspitze 16 hat die Laserbearbeitungsdüse 4a einen vielfach größeren Durchmesser als die Mündung 15 selbst.

Das zusätzlich mithilfe des Hohlraums 17 angebrachte Stauvolumen ist deshalb so angebracht und ausgeformt, dass Teile des radial abströmenden Gases über eine "Walzenströmung" rückgeführt werden und den Schneidgasstrahl ummanteln. Je näher die Düsenspitze 16 zum zu bearbeitenden Blech angeordnet ist, umso höher wird der Strömungswiderstand und um so wirkungsvoller lässt sich das Staudruckprofil radial ausweiten. Für die Entstehung der Walzenströmung ist in erster Linie die keilförmig zulaufende Kante **18'** an der Unterseite der Laserbearbeitungsdüse 4a verantwortlich. Radial abströmendes Bearbeitungsgas wird von hier teilweise in den Hohlraum 17 umgelenkt und strömt entlang der Innenflächen **17'** und **17"** des Hohlraums 17 über die Auslaufkante **18"** zum Hauptgasstrahl 19 zurück. Die keilförmige Geometrie bewirkt einerseits die Strömungsablösung des radial abströmenden Bearbeitungsgases und wirkt andererseits als Strömungsleitgeometrie zur Ausbildung der Walzenströmung. Neben der Kante 18' sind die Form des Hohlraums 17 und die Erstreckung des Hohlraums 17 bis hinter die Düsenmündung 15 für die Ausbildung der Walzenströmung relevant.

Damit die Walzenströmung entsteht, muss außerdem der Schneidabstand, das heißt der Abstand zwischen der Düsenunterkante der Düsenspitze 16 und der Blechoberfläche, verhältnismäßig klein (< 0,7 mm, wobei sich der beste Schneidabstand für 0,3 bis 0,5 mm ergibt) gewählt werden. Ist der Schneidabstand größer, entsteht auf der Blechoberfläche ein Druckpolster, das einen effektiven Impulsübertrag des Bearbeitungsgases verhindert. Außerdem kommt es nicht mehr zur Ausbildung der Walzenströmung.

Dies ergibt einen höheren Überdeckungsgrad der Schneidfront, der sich positiv auf
- Qualität (Schmelzschnitt anstelle Plasmaschnitt im Dickblechbereich, gleichförmige Riefenstruktur);
- Vorschub (+10 bis +20%, in Einzelfällen +80 bis +100%);
- Plasmaschwelle (Schmelzschnitt im Dickblechbereich);
- Gasverbrauch
auswirkt.

Bei gleichem Mündungsdurchmesser liegt der Schneidgasverbrauch unter den derzeitigen Standardwerten. Erste Untersuchungen lassen erkennen, dass zudem mit kleineren Mündungsdurchmessern geschnitten werden kann, so dass der Schneidgasverbrauch weiter reduziert werden kann.

Für eine zufrieden stellende Funktion der Laserbearbeitungsdüse 4a kann die Innenseite des Hohlraums 17, welche an die Düsenöffnung anschließt, nach außen geneigt sein. Abhängig vom Neigungswinkel, d.h. dem Winkel zwischen der Innenseite 17' und dem Werkstück, erfolgt die Umlenkung des radial abströmenden Gases um so verlustfreier, je größer die Neigung, d.h. je spitzer der Neigungswinkel, ist. Zur bestmöglichen Ausformung der Walzenströmung ist es notwendig, das Stauvolumen hinter die Ebene des Mündungsbereichs zurückzuziehen. Die Geometrie im Bereich des Bodens 18 und der anschließende Flanken 18' kann dabei kreisrund oder elliptisch ausgebildet sein.

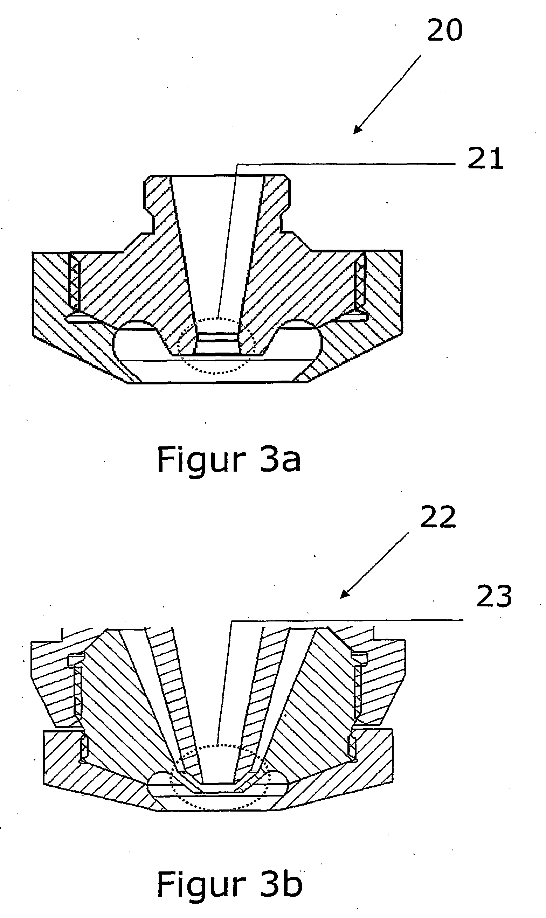

Die **Figuren 3a** und **3b** zeigen Alternativen zur Lochdüse 4a gemäß Figur 1. Wie in Figur 3a gezeigt, besitzt eine Laserbearbeitungsdüse **20** eine konische Mündung **21** (Lavaldüse). Wie in Figur 3b dargestellt, besitzt eine Laserbearbeitungsdüse **22** einen Ringspalt **23.** Diese alternativen Ausführungsformen sind mit einem bezüglich der Laserbearbeitungsdüse 4a gemäß Figur 1 unveränderten Stauvolumen kombiniert. Die erfindungsgemäße Funktionsweise bleibt daher erhalten.

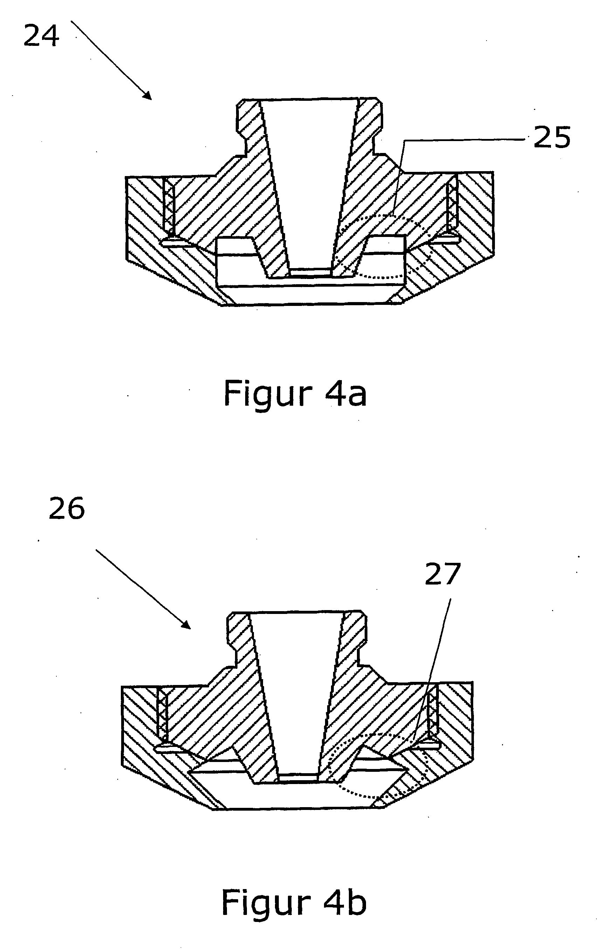

Die **Figuren 4a** und **4b** zeigen Alternativen zu dem Stauvolumen der Laserbearbeitungsdüse 4a gemäß Figur 1. Wie in Figur 4a und 4b gezeigt, sind außer runden Geometrien auch eckige Ausbildungen des Hohlraums bei den Laserbearbeitungsdüsen **24** (Hohlraum **25**) und **26** (Hohlraum **27**) denkbar.

## Patentansprüche

1. Laserbearbeitungsdüse (4a; 20; 22; 24; 26) mit mindestens einem Zuführungsraum (14) für den Laserstrahl und für ein Bearbeitungsgas, wobei eine zentrale Mündung (15) des Gaszuführungsraums (14) hinter die Düsenspitze (16) der Laserbearbeitungsdüse (4a; 20; 22; 24; 26) zurückgezogen ist, **dadurch gekennzeichnet, dass** die Laserbearbeitungsdüse (4a; 20; 22; 24; 26) einen im Bereich der Mündung (15) des Gaszuführungsraums (14) angeordneten Hohlraum (17; 25; 27) aufweist, welcher nur in Richtung des zu bearbeitenden Werkstücks und zur zentralen Mündung (15) des Gaszuführungsraums (14) offen ist, wobei der Hohlraum (17; 25; 27) eine keilförmige Kante (18') zur Erzeugung einer Walzenströmung aufweist.

2. Laserbearbeitungsdüse nach Anspruch 1, **dadurch gekennzeichnet, dass** der Hohlraum (17; 25; 27) rotationssymmetrisch zur mündung (15) des Gaszuführungsraums (14) angeordnet ist.

3. Laserbearbeitungsdüse nach einem der vorhergehenden Ansprüche, **dadurch gekennzeichnet, dass** der Hohlraum (17) im Bereich des Hohlraumbodens (18) eine rund ausgebildete Innenkontur aufweist.

4. Laserbearbeitungsdüse nach einem der Ansprüche 1 bis 3, **dadurch gekennzeichnet, dass** der Hohlraum (25; 27) im Bereich des Höhlraumboden eine eckig ausgebildete Innenkontur aufweist.

5. Laserbearbeitungsdüse nach einem der vorhergehenden Ansprüche, **dadurch gekennzeichnet, dass** die Innenseiten (17', 17") des Hohlraums (17; 25; 27) bezüglich der Richtung des Gaszuführungsraums (14) quer angeordnet sind.

6. Laserbearbeitungsdüse nach einem der vorhergehenden Ansprüche, **dadurch gekennzeichnet, dass** sich der Hohlraum (17; 25; 27) bis hinter die Mündung (15) des Gaszuführungsraums (14) erstreckt.

7. Laserbearbeitungsdüse nach einem der vorhergehenden Ansprüche, **dadurch gekennzeichnet, dass** die Öffnung des Hohlraums (17; 25; 27) eine Auslaufkante (18") aufweist.

## Claims

1. Laser machining nozzle (4a; 20; 22; 24; 26) having at least one supply chamber (14) for the laser beam and for a processing gas, wherein a central orifice (15) of the gas supply chamber (14) is recessed behind the nozzle tip (16) of the laser machining nozzle (4a; 20; 22; 24; 26), **characterised in that** the laser machining nozzle (4a; 20; 22; 24; 26) has a cavity (17; 25; 27) arranged in the region of the orifice (15) of the gas supply chamber (14), which cavity is only open in the direction towards the workpiece to be machined and towards the central orifice (15) of the gas supply chamber (14), wherein the cavity (17; 25; 27) has a wedge-shaped edge (18') for generating a tumble flow.

2. Laser machining nozzle according to claim 1, **characterised in that** the cavity (17; 25; 27) is arranged rotationally symmetrically with respect to the orifice (15) of the gas supply chamber (14).

3. Laser machining nozzle according to any one of the preceding claims, **characterised in that** the cavity (17) has an inner contour of rounded construction in the region of the cavity base (18).

4. Laser machining nozzle according to any one of claims 1 to 3, **characterised in that** the cavity (25; 27) has an inner contour of angular construction in the region of the cavity base.

5. Laser machining nozzle according to any one of the preceding claims, **characterised in that** the insides (17', 17") of the cavity (17; 25; 27) are arranged transversely with respect to the direction of the gas supply chamber (14).

6. Laser machining nozzle according to any one of the preceding claims, **characterised in that** the cavity (17; 25; 27) extends to behind the orifice (15) of the gas supply chamber (14).

7. Laser machining nozzle according to any one of the preceding claims, **characterised in that** the opening of the cavity (17; 25; 27) has a discharge edge (18").

## Revendications

1. Buse d'usinage par laser (4a ; 20 ; 22 ; 24 ; 26) comportant au moins une chambre d'amenée (14) pour le faisceau laser et pour un gaz d'usinage, une embouchure centrale (15) de la chambre d'amenée de gaz (14) étant en retrait derrière la pointe de buse (16) de la buse d'usinage par laser (4a ; 20 ; 22 ; 24 ; 26), **caractérisée en ce que** la buse d'usinage par laser (4a ; 20 ; 22 ; 24 ; 26) présente une cavité (17 ; 25 ; 27) disposée dans la région de l'embouchure (15) de la chambre d'amenée de gaz (14), laquelle est ouverte seulement en direction de la pièce à usiner et vers l'embouchure centrale (15) de la chambre d'amenée de gaz (14), la cavité (17 ; 25 ; 27) présentant une arête en forme de coin (18') pour générer un écoulement circulent.

2. Buse d'usinage par laser selon la revendication 1, **caractérisée en ce que** la cavité (17 ; 25 ; 27) est disposée avec une symétrie de révolution par rapport à l'embouchure (15) de la chambre d'amenée de gaz (14).

3. Buse d'usinage par laser selon une des revendications précédentes, **caractérisée en ce que** la cavité (17) présente un contour intérieur de forme arrondie dans la région du fond de cavité (18).

4. Buse d'usinage par laser selon une des revendications 1 à 3, **caractérisée en ce que** la cavité (25 ; 27) présente un contour intérieur de forme anguleuse dans la région du fond de cavité.

5. Buse d'usinage par laser selon une des revendications précédentes, **caractérisée en ce que** les côtés intérieurs (17', 17") de la cavité (17 ; 25 ; 27) sont disposés en biais par rapport à la direction de la chambre d'amenée de gaz (14).

6. Buse d'usinage par laser selon une des revendications précédentes, **caractérisée en ce que** la cavité (17 ; 25 ; 27) s'étend jusque derrière l'embouchure (15) de la chambre d'amenée de gaz (14).

7. Buse d'usinage par laser selon une des revendications précédentes, **caractérisée en ce que** l'ouverture de la cavité (17 ; 25 ; 27) présente une arête de sortie (18").
